# EUROPEAN PATENT SPECIFICATION

(11) **EP 1 259 013 B1**
(45) Date of publication and mention of the grant of the patent: **22.12.2004**
(21) Application number: 00985927.3
(22) Date of filing: 27.12.2000
(51) Int. Cl.: H04J 13/00, H04B 17/00

(54) **DEVICE AND METHOD FOR DISPLAYING CODE DOMAIN POWER**
EINRICHTUNG UND VERFAHREN ZUR ANZEIGE DER LEISTUNG IM CODEBEREICH
DISPOSITIF ET PROCEDE D'AFFICHAGE DE LA PUISSANCE DE DOMAINE DE CODE

(30) Priority: 29.12.1999 JP 37745499
(43) Date of publication of application: 20.11.2002
(73) Proprietor: Agilent Technologies Inc., Hachioji-shi, Tokyo 192-8510 (JP)
(72) Inventor: HANDO, Takayuki, Tarumi-ku, Kobe-shi, Hyogo 655-0854 (JP)
(74) Representative: Lippich, Wolfgang, Dipl.-Phys, Dr.rer.nat.
(86) International application number: PCT/JP2000/009295
(87) International publication number: WO 2001/050660

(56) References cited:
- GB-A- 2 338 378
- JP-A- 11 098 108
- JP-A- 11 186 989
- JP-A- 2000 134 180
- JP-A- 2000 216 754
- SARKAR S ET AL: "CDMA2000 REVERSE LINK: DESIGN AND SYSTEM PERFORMANCE" VTC 2000-FALL. IEEE VTS 52ND. VEHICULAR TECHNOLOGY CONFERENCE. BOSTON, MA, SEPT. 24 - 28, 2000, IEEE VEHICULAR TECHNOLGY CONFERENCE, NEW YORK, NY: IEEE, US, vol. 6 OF 6. CONF. 52, 24 September 2000 (2000-09-24), pages 2713-2719, XP001033030 ISBN: 0-7803-6508-9
- LILJA H ET AL: "WCDMA uplink modulation scheme evolution and transmitter implementation" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 899-903, XP010353106 ISBN: 0-7803-5435-4
- SHIM JAERYONG ET AL: "Spectrally efficient modulation and spreading scheme for CDMA systems" ELECTRONICS LETTERS, IEE STEVENAGE, GB, vol. 34, no. 23, 12 November 1998 (1998-11-12), pages 2210-2211, XP006010605 ISSN: 0013-5194
- HUANG C: "AN ANALYSIS OF CDMA 3G WIRELESS COMMUNICATIONS STANDARDS" 1999 IEEE 49TH. VEHICULAR TECHNOLOGY CONFERENCE. HOUSTON, TX, MAY 16 - 20, 1999, IEEE VEHICULAR TECHNOLOGY CONFERENCE, NEW YORK, NY: IEEE, US, vol. 1 CONF. 49, 16 May 1999 (1999-05-16), pages 342-345, XP000899252 ISBN: 0-7803-5566-0

## Description

### TECHNICAL FIELD

The present invention relates to an apparatus for testing a mobile communication system. More particularly, the present invention relates to an apparatus and a method for displaying code domain power in a code domain measuring apparatus.

### BACKGROUND ART

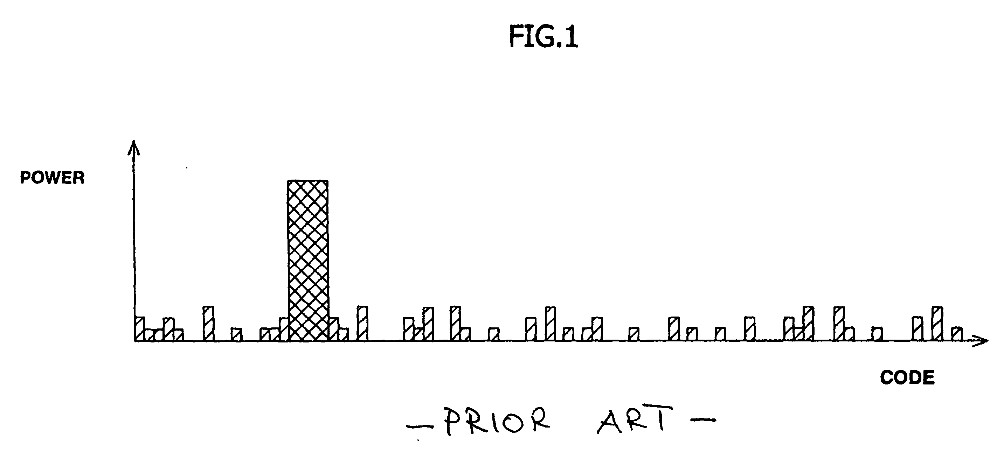

For measuring the code domain power (CDP) of a CDMA (Code Division Multiple Access) signal such as of cdmaOne(TM) or the like with a conventional code domain measuring apparatus, it has been customary for the code domain measuring apparatus to employ a process of displaying codes on a horizontal axis and the power of the codes on a vertical axis, as shown in FIG. 1 of the accompanying drawings.

The applicant (assignee) of the present application has filed Japanese patent application No. 11-125658 entitled "Method of displaying the power level of CDMA signal" on May 6, 1999. In the disclosed method, there has been described a process of displaying the power levels in respective active code channels in a plurality of code layers with bars shown in FIG. 1. The Japanese patent application discloses a technique for indicating in which code layer each active code channel is active and allowing the observer to observe the power level easily, using the width of the bars shown in FIG. 1.

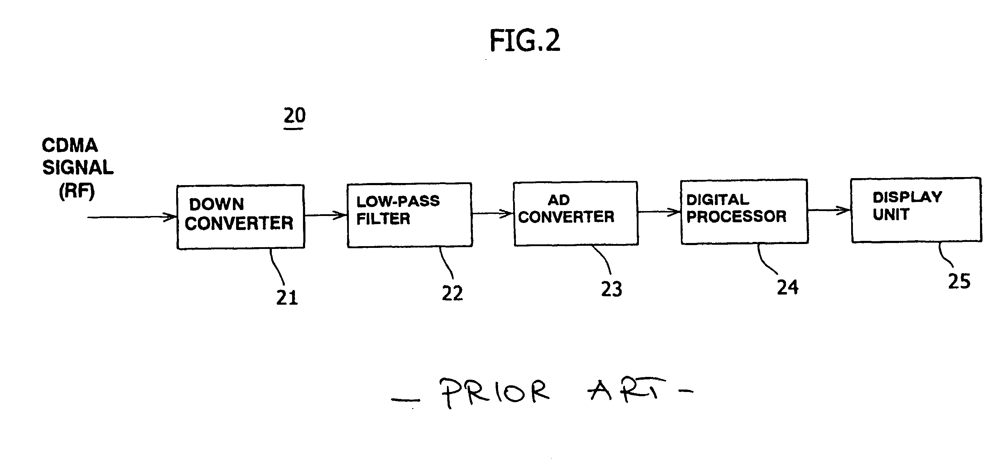

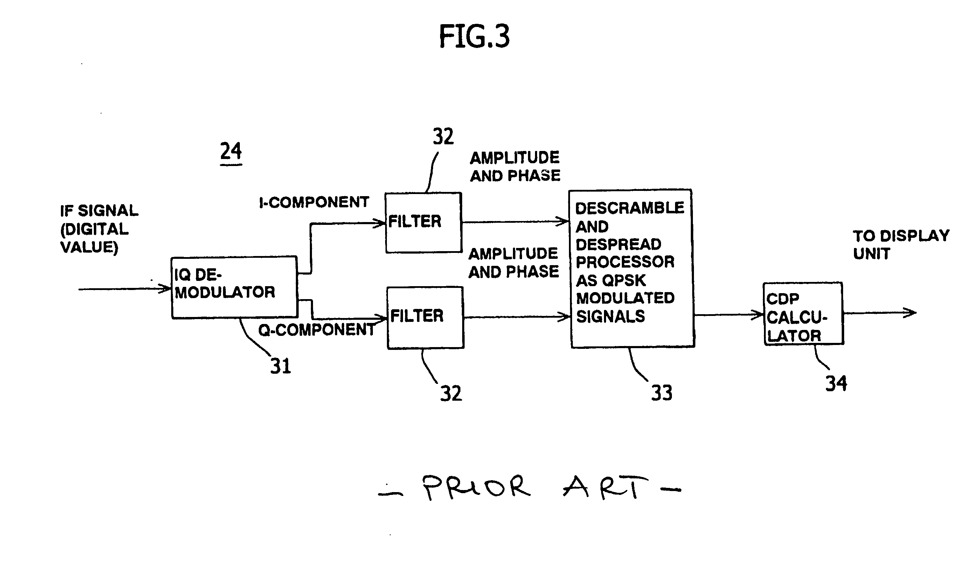

One apparatus for carrying out such a process of code domain power is shown in FIGS. 2 and 3 of the accompanying drawings. FIG. 2 is a block diagram of a conventional code domain power analyzing apparatus 20, and FIG. 3 is a detailed block diagram of a digital processor 24 which is part of the code domain power analyzing apparatus 20. An intermediate frequency (IF) signal is generated from an input CDMA signal (RF signal) by a down converter 21 and a low-pass filter 22. The IF signal is input to an analog-to-digital converter (A/D converter) 23, which inputs a digital IF signal to a digital processor 24. As shown in FIG. 3, the digital processor 24 comprises an IQ demodulator 31, filters 32, a descrambler/despreading means 33, and a code domain power (CDP) calculator 34. The digital IF signal is divided by the IQ demodulator 31 into an in-phase (I) component signal and a quadrature (Q) component signal, which are supplied through the respective filters 32 as QPSK modulated signals containing amplitude and phase information to the descrambling/despreading means 33, respectively. The descrambler/despreading means 33 descrambles and despreads the two component signals as the QPSK modulated signals. The CDP calculator 34 calculates CDP from an output signal from the descrambling/despreading means 33, and generates a signal for displaying the bars as shown in FIG. 1 on a display unit 25.

The Japanese patent application also discloses a process of displaying the bars in different colors to distinguish the power of an active code channel from the power of inactive code channels. The disclosed process makes it possible to allow the observer to observe the power of a plurality of code layers at the same time, unlike the conventional process which has allowed the observer to observe the code power of only one code layer per screen on the measuring unit.

GB 2 338 378 A, according to which the preamble of the independent apparatus claims has been drafted, discloses a power level display for CDMA signal. A transmitted radio frequency signal is down converted to a complex baseband signal (I and Q). Despread blocks remove the spreading for each code layer. A code domain power display is adapted to display code domain power for code domains or active code channels.

There has in recent years been proposed a modulating process referred to as HPSK (Hybrid Phase Shift Keying) (also known as OCQPSK (Orthogonal Complex Quadrature Phase Shift Keying) as a spreading process for use in W-CDMA and cdma2000 which are new standards to be introduced in the future, for the purpose of increasing the frequency utilization efficiency of upstream signals from terminal devices to base stations. For example, the following documents pertain to W-CDMA: (i) Lilja, H. et al: "WCDNA Uplink Modulation Scheme Evolution and Transmitter Implementation", Vehicular Technology Conference, 1999, VTC 1999 - Fall. IEEE VTS 50th Amsterdam, Netherland, pp. 899-903; (ii) Shim, JaeRyong et al: "Spectrally efficient modulation and spreading scheme for CDMA systems", Electronics Letters, IEE Stevenage, GB, vol. 34, no. 23, pp. 2210-2211; and (iii) Huang, C: "An Analysis of CDMA 3G Wireless Communication Standards", Vehicular Technology Conference, Houston, TX, May 16-20, 1999, IEEE Vehicular Technology Conference, New York, NY: IEEE, US, vol.1 Conf. 49, pp. 342-345.

### DISCLOSURE OF THE INVENTION

It is an object of the present invention to provide a novel method of displaying code domain power and a novel apparatus for measuring code domain power, which are suitable for analyzing a CDMA signal according to an HPSK modulating process.

To achieve the above object, an apparatus for displaying code domain power according to the present invention is arranged as follows: the apparatus has a down-converter for receiving a CDMA signal and down-converting the CDMA signal into an intermediate frequency (IF) signal, an analog-to-digital (A/D) converter for converting the generated IF signal into a digital IF signal, a digital signal processor for demodulating the digital IF signal into I and Q components, descrambling and despreading the I and Q components to calculate code domain power (CDP), and a display for displaying the CDP in response to signals from the digital signal processor, wherein the digital signal processor comprises two processors for individually descrambling and despreading as BPSK modulated signals each of the I and Q component signals having amplitude and phase information obtained by demodulating the digital IF signal, and two CDP calculators connected to the I component signal processor and the Q component signal processor, respectively, which calculate CDP with respect to I- and Q-axes, respectively, from two different signals calculated by descrambling and despreading the I and Q component signals, and enable said display which is connected to both said CDP calculators to display distinguishably the CDPs of each of the I- and Q-axes calculated by said CDP calculators. Since the I and Q components are individually descrambled and despread, the power distributed on the I- and Q-axes by HPSK can distinguishably be extracted and displayed to the advantage of the observer.

The two processors of the digital signal processor may descramble and despread I and Q component signals having amplitude and phase information obtained by demodulating the digital IF signal, as QPSK modulated signals with a first scrambling code, and simultaneously descramble and despread the I and Q component signals as QPSK modulated signals with a second scrambling code, and each CDP calculator connected to the first and second processors, respectively, may calculate the CDP with respect to I- and Q-axes from two different signals obtained by descrambling and despreading the I and Q component signals with the scrambling codes, and the display which is connected to the CDP calculator may display the CDPs corresponding to the first and second scrambling codes distinguishably on the display. With this arrangement, the code domain powers with respect a downstream signal scrambled with different scrambling codes can be simultaneously displayed for the respective scrambling codes. Since the scrambling codes are assigned to respective cells or sectors, the code domain power between sectors or cells can simply be observed advantageously.

In addition, the digital signal processor may be arranged to enable the display to display the CDPs calculated from the two different signals calculated by descrambling and despreading the I and Q components, on respective different axes of dimension. With this arrangement, the power distributed on the I- and Q-axes and the relationship between the power and codes can quickly be recognized visually. The arrangement is also highly advantageous in that it can not only determine whether an upstream signal modulator is normal or not, but also can easily obtain information necessary to analyze the cause of a malfunction. For displaying the CDP of a downstream signal scrambled with different scrambling codes, since the powers are displayed on different axes of dimension for respective codes, the powers can be simultaneously displayed and the power distribution can quickly be recognized visually.

Alternatively, the digital signal processor may be arranged to enable the display to display the CDPs calculated from the two different signals calculated by descrambling and despreading the I and Q components, on an identical axis of dimension in a stacked fashion. With this arrangement, the total power for the same code that is distributed on the I-axis and the Q-axis can easily be observed. This function is particularly effective in confirming the power distribution for the codes as required in an initial phase of development of terminals.

Further alternatively, the digital signal processor may be arranged to enable the display to display the CDPs in a visually distinguishable manner with colors or patterns, said CDPs have been calculated from the two different signals calculated by descrambling and despreading the I and Q components. With this arrangement, the power at a desired code and the power distributed on the I- and Q-axes can be distinguished from each other.

### BRIEF DESCRIPTION OF THE DRAWINGS

FIG. 1 is a diagram showing a conventional manner for displaying CDP;
FIG. 2 is a block diagram of a conventional code domain power analyzing apparatus 20;
FIG. 3 is a detailed block diagram of a convention digital processor 24 shown in FIG. 2;
FIG. 4 is a diagram showing a style for displaying CDP according to an embodiment of the present invention;
FIG. 5 is a block diagram of a code domain power analyzing apparatus 50 according to the present invention;
FIG. 6 is a detailed block diagram of a digital processor 54 shown in FIG. 5;
FIG. 7 is a block diagram of a code domain power analyzing apparatus 70 according to a second embodiment of the present invention;
FIG. 8 is a detailed block diagram of a digital processor 74 shown in FIG. 7; and
FIG. 9 is a diagram showing a style for displaying CDP according to another embodiment of the present invention.

### BEST MODE FOR CARRYING OUT THE INVENTION

Embodiments which are considered as best at present will be described in detail below with reference to the drawings. Components denoted by like reference numerals have like functions throughout the figures.

It has been recognized that, for measuring an upstream CDMA signal according to the proposed HPSK modulating process, it is useful to take into account another different dimension in addition to codes on the code domain. The power of codes and leakages of the power to other codes, not only in one axis, but also from the I-axis to the Q-axis and vice versa, may be measured and displayed so that they can be read accurately and quickly.

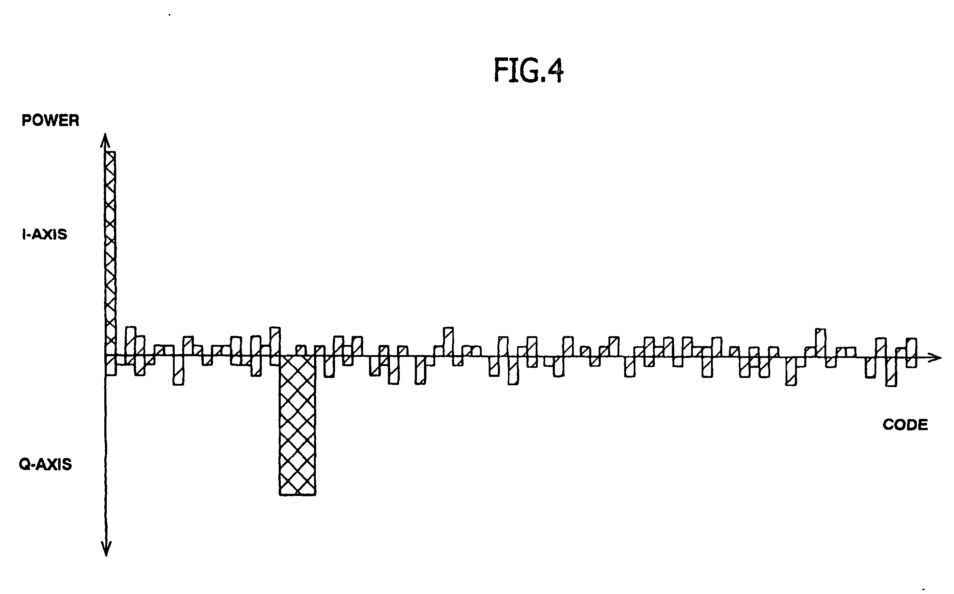

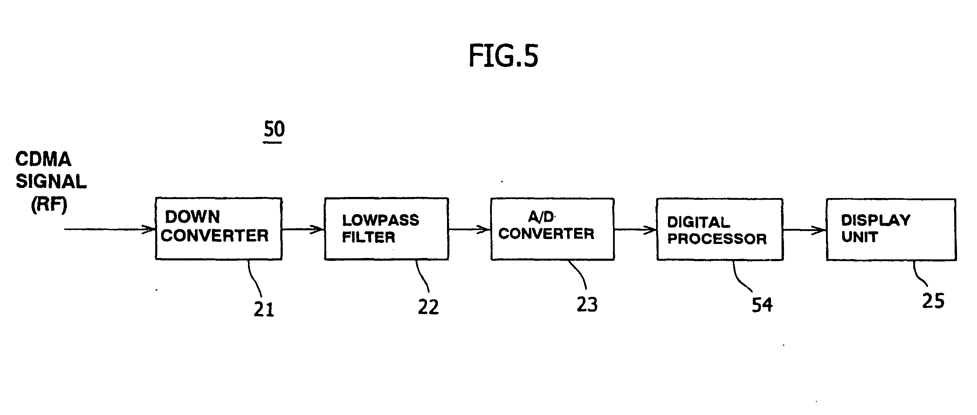

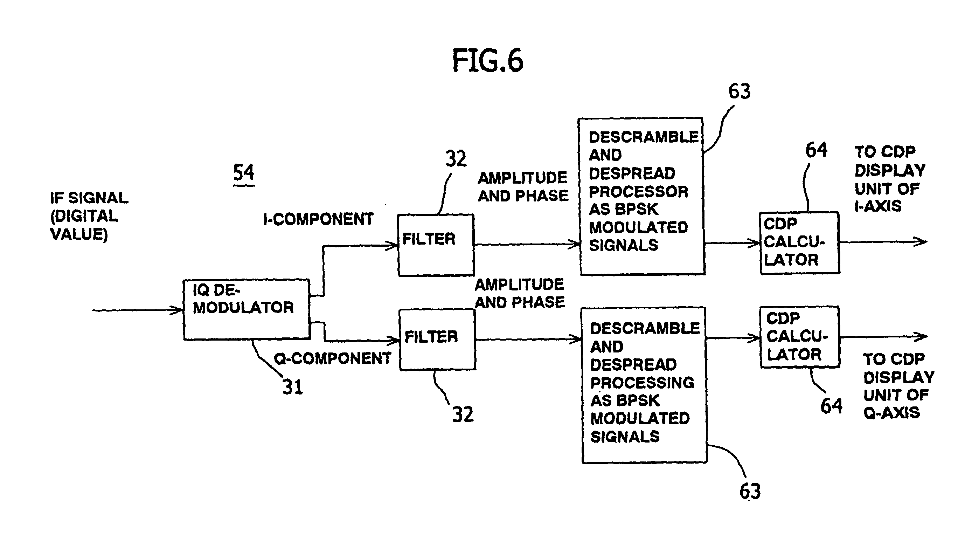

As shown in FIG. 4, a method of displaying code domain power (hereinafter referred to as CDP) according to the present invention for achieving the above object simultaneously displays the power of the I-axis and the power of the Q-axis as bars above and below a horizontal axis (codes) (e.g., the power of the I-axis above the horizontal axis and the power of the Q-axis below the horizontal axis), with each of the bars having a length representing the power level and a width representing a code layer where an active channel locates. FIG. 5 is a block diagram of a code domain power analyzing apparatus 50 according to the present invention for carrying out the above method, and FIG. 6 is a detailed block diagram of a digital processor 54 which is part of the code domain power analyzing apparatus 50. Basically, the block diagram of the CDP analyzing apparatus 50 is the same as the block diagram of the conventional CDP analyzing apparatus 20, but differs essentially therefrom in that the digital processor 54 descrambles and despreads an I component and a Q component as BPSK modulated signals separately from each other as shown in FIG. 6. A sequence of operation of the CDP analyzing apparatus 50 according to the present invention will be described below.

A received CDMA signal (RF signal) is downconverted into an intermediate frequency (IF) signal by a down converter 21 and a low-pass filter 22. The IF signal is input to an analog-to-digital converter (A/D converter) 23, which inputs a digital IF signal to the digital processor 54. As shown in FIG. 6, the digital processor 54 comprises an IQ demodulator 31, filters 32, descrambler/despreading means 63, and code domain power (CDP) calculators 64. By means of the IQ demodulator 31, the digital IF signal is divided into an in-phase (I) component signal and a quadrature (Q) component signal, which are supplied through the respective filters 32 as BPSK modulated signals containing amplitude and phase information individually to the respective descrambler/despreading means 63. The descrambler/despreading means 63 individually descramble and despread the two component signals respectively as the BPSK modulated signals. A signal obtained from the I component signal is input to one of the CDP calculators 64, which calculates CDP of the I-axis. A signal obtained from the Q component signal is input to the other CDP calculator 64, which calculates CDP of the Q-axis. These CDP calculators 64 generate signals for displaying the bars as shown in FIG. 4 on a display unit 25.

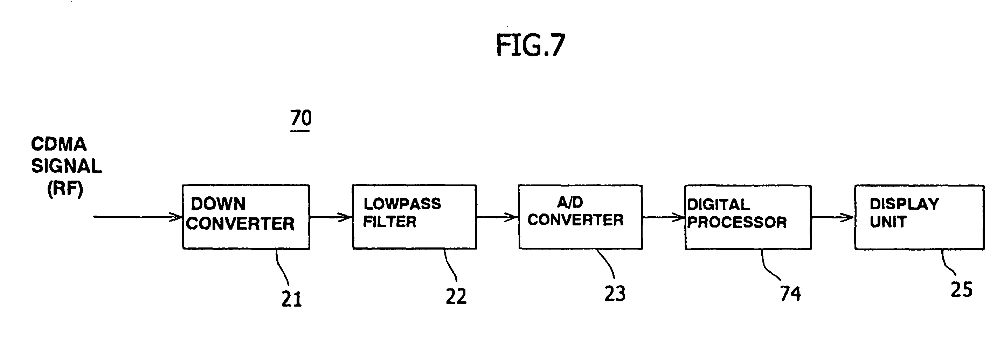

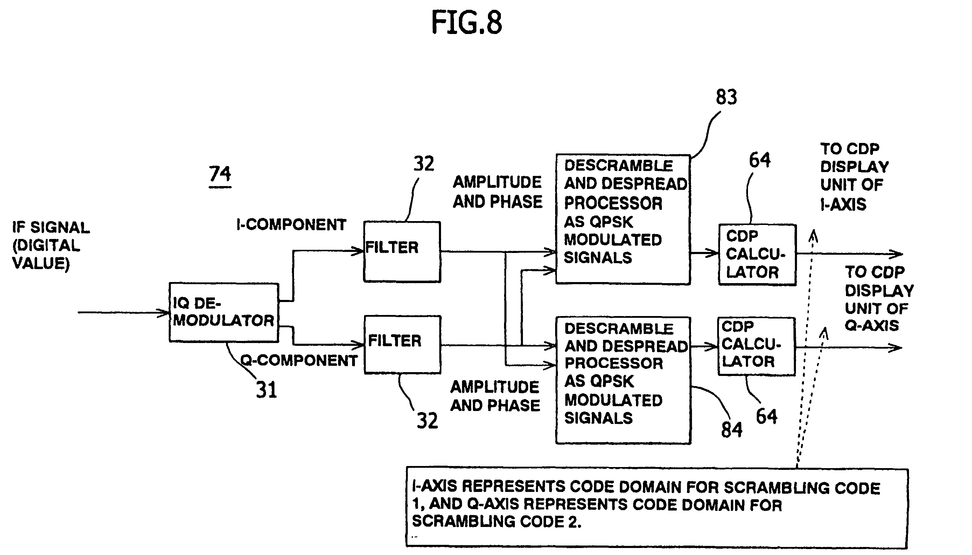

FIG. 7 shows a CDP analyzing apparatus 70 according to a second embodiment of the present invention, for displaying the power of code domains of different scrambling codes for a downstream signal. FIG. 8 is a detailed block diagram of a digital processor 74 which is part of the code domain power analyzing apparatus 70. The CDP analyzing apparatus 70 is capable of simultaneously displaying two types of signals of different scrambling codes (signals scrambled respectively by a first scrambling code and a second scrambling code) respectively above and below a code axis. The signals thus displayed make it possible to easily observe leakages of code domain power across sectors or cells. The arrangement shown in FIGS. 7 and 8 has been devised to carry out such a displaying process. The CDP displaying apparatus according to the second embodiment is the same as the CDP displaying apparatus according to the first embodiment except for the digital signal processor 74. The second embodiment is also characterized by the digital signal processor 74. In the digital signal processor 74, a digital IF signal generated by the A/D converter 23 is IQ-demodulated into two signals containing amplitude and phase information. The two signals as QPSK modulated signals are descrambled and despread (by a first descrambler/despreading means 83) with a first scrambling code, and are simultaneously descrambled and despread (by a second descrambler/despreading means 84) with a second scrambling code. The two signals thus descrambled and despread with the respective two scrambling codes are processed to calculate CDP by the respective CDP calculators 64 for displaying the CDP above and below the code axis. The CDP calculators 64 generate signals for displaying the bars as shown in FIG. 4 on the display unit 25.

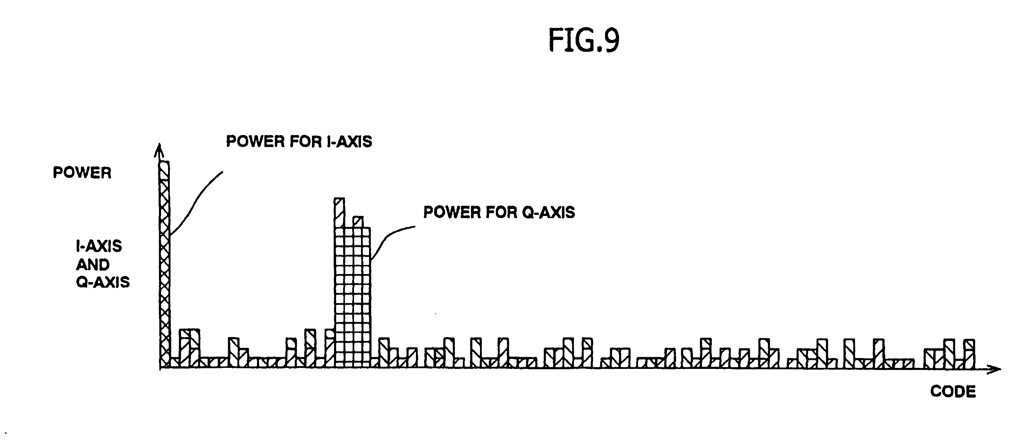

According to a third embodiment of the present invention, as shown in FIG. 9, the bars are of the same type as described above, but the power of the I-axis and the power of the Q-axis are displayed in a stacked fashion. This display mode is suitable for observing the total power for the same code that is distributed on the I-axis and the Q-axis. The display mode is also effective in confirming the power distribution for the codes because the power distribution is required in an initial phase of development of terminals. The display mode can be achieved by modifying the program in a stage for performing the CDP calculation by the digital signal processor 54 and 74.

The power distributed on the I-axis and the Q-axis may be expressed so as to be identified visually with some attributes (e.g., colors or patterns) of the bars that indicate the power, so that the power of a desired code and the power due to an error can be distinguished from each other. This method is particularly effective because it allows the power distributed on the axes can easily be identified, according to the third embodiment; and because it allows the total power for the same code that is distributed on the I-axis and the Q-axis to be easily observed. This process can also be achieved by modifying the program of the digital signal processor.

## Claims

1. An apparatus (50) for displaying code domain power in a CDMA signal analysis, comprising:
a down-converter (21) for receiving a CDMA signal and down-converting the CDMA signal into an intermediate frequency (IF) signal;
an analog-to-digital (A/D) converter (23) for converting the generated IF signal into a digital IF signal;
a digital signal processor (54) for IQ-demodulating the digital IF signal, descrambling and despreading I and Q components to calculate code domain power CDP; and
a display (25) for displaying the CDP in response to signals from the digital signal processor (54);
**characterized in that**
said digital signal processor (54) comprises two processors (63) for individually descrambling and despreading as BPSK modulated signals each of the I and Q component signals having amplitude and phase information obtained by demodulating the digital IF signal, and two CDP calculators (64) connected to the I component signal processor (63) and the Q component signal processor (63), respectively, which calculate CDPs with respect to I- and Q-axes, respectively, from two different signals obtained by descrambling and despreading the I and Q component signals, and enables said display (25) which is connected to both said CDP calculators (64) to display distinguishably the CDPs of each of the I- and Q-axes calculated by said CDP calculator (64).

2. An apparatus (70) for displaying code domain power in a CDMA signal analysis, comprising
a down-converter (21) for receiving a CDMA signal and down-converting the CDMA signal into an intermediate frequency (IF) signal;
a analog-to-digital (A/D) converter (23) for converting the generated IF signal into a digital IF signal;
a digital signal processor (74) for demodulating the digital IF signal into I and Q components, descrambling and despreading the I and Q components to calculate code domain power CDP; and
a display (25) for displaying the CDP in response to signals from the digital signal processor (74);
**characterized in that**
said digital signal processor (74) comprises two processors (83, 84) which descramble and despread I and Q component signals having amplitude and phase information obtained by demodulating the digital IF signal, as QPSK modulated signals with a first scrambling code; simultaneously descramble and despread the I and Q component signals as QPSK modulated signals with a second scrambling code; and two CDP calculators (64) connected to the first and second processors (83, 84), respectively, which calculate each CDP with respect to I- and Q-axes from two different signals obtained by descrambling and despreading the I and Q component signals with the scrambling codes; and enable the display (25) which is connected to both said CDP calculators (64) to display distinguishably the CDPs corresponding to the first and second scrambling codes calculated by said CDP calculator (64).

3. An apparatus (50) according to claim 1, wherein said digital signal processor (54) enables said display (25) to display the CDPs calculated from said two different signals on respective different axes of dimension.

4. An apparatus (50) according to claim 1, wherein said digital signal processor (54) enables said display (25) to display the CDPs calculated from said two different signals on an identical axis of dimension in a stacked fashion.

5. An apparatus (50) according to claim 1, wherein said digital signal processor (54) means enables said display (25) to display the CDPs visually distinguishably with colors or patterns, said CDPs are calculated from said two different signals.

6. A method of displaying code domain power, comprising:
converting a frequency of a CDMA signal to generate an intermediate frequency (IF) signal,
converting the IF signal into a digital IF signal for IQ-demodulating the digital IF signal,
descrambling and despreading individually at two processors (63) which correspond respectively to each of the I and Q component signals obtained by IQ-demodulating the digital IF signal, as respective BPSK modulated signals,
calculating by two CDP calculators (64) connected to the I component signal processor (63) and the Q component signal processor (63), respectively, a code domain power, CDP, of an I-axis and a code domain power of a Q-axis from signals obtained by descrambling and despreading the I and Q component signals, and
displaying on a display (25) connected to said both CDP calculators (64) the calculated code domain powers.

7. A method of displaying code domain power, comprising:
converting a frequency of a CDMA signal to generate an intermediate frequency (IF) signal for converting the IF signal into a digital IF signal,
IQ-demodulating the digital IF signal,
descrambling and despreading individually each of the I and Q component signals obtained by IQ-demodulating the digital IF signal, as respective QPSK modulated signals using a first scrambling code and a second scrambling code at two processors (83, 84) which correspond to each of said first and second scrambling codes,
calculating by two CDP calculators (64) connected to the first and second processors (83, 84), respectively, a code domain power, CDP, with said first scrambling code and a code domain power with said second scrambling code from signals obtained by descrambling, and
despreading the I and Q component signals and displaying on a display (25) connected to both said CDP calculators (64) the calculated code domain powers.

8. A method according to claim 6, wherein the CDPs calculated in the calculating step are displayed respectively on different axes of dimension.

9. A method according to claim 6, wherein the CDPs calculated in the calculating step are displayed on an identical axis of dimension.

10. A method according to claim 6, wherein the CDPs calculated in the calculating step are displayed visually distinguishably with colors or patterns.

## Patentansprüche

1. Vorrichtung (50) zur Anzeige von Code Domain Power bei einer CDMA-Signalanalyse, die Folgendes umfasst:
einen Rückwandler (21) zum Empfang eines CDMA-Signals und zum Rückwandeln des CDMA-Signals in ein Zwischenfrequenzsignal (IF-Signal);
einen Analog-Digital-Wandler (A/D-Wandler) (23) zum Umwandeln des erzeugten IF-Signals in ein digitales IF-Signal;
einen digitalen Signalprozessor (54) zur IQ-Demodulation des digitalen IF-Signals, wobei I- und Q-Komponenten entwürfelt und entspreizt werden, um die Code Domain Power, CDP, zu berechnen; und
eine Anzeige (25) zum Anzeigen der CDP als Reaktion auf Signale vom digitalen Signalprozessor (54);
**dadurch gekennzeichnet, dass**
der digitale Signalprozessor (54) Folgendes umfasst: zwei Prozessoren (63) zum individuellen Entwürfeln und Entspreizen jedes der I- und Q-Komponentensignale als BPSK-modulierte Signale, wobei die I- und Q-Komponentensignale über Amplitudenund Phaseninformationen verfügen, die sie durch Demodulation des digitalen IF-Signals erhalten haben, sowie zwei CDP-Berechnungsvorrichtungen (64), die mit dem I-Komponentensignalprozessor (63) bzw. dem Q-Komponentensignalprozessor (63) verbunden sind, die ausgehend von zwei unterschiedlichen Signalen, die durch Entwürfeln und Entspreizen der I- und Q-Komponentensignale erhalten wurden, CDPs hinsichtlich der I- bzw. Q-Achse berechnen, und die Anzeige (25), die mit beiden CDP-Berechnungsvorrichtungen (64) verbunden ist, aktivieren, so dass die Anzeige die CDPs jeder der I- und Q-Achsen, die mit der CDP-Berechnungsvorrichtung (64) berechnet wurden, unterscheidbar anzeigt.

2. Vorrichtung (70) zum Anzeigen von Code Domain Power bei einer CDMA-Signalanalyse, die Folgendes umfasst:
einen Rückwandler (21) zum Empfang eines CDMA-Signals und zum Rückwandeln des CDMA-Signals in ein Zwischenfrequenzsignal (IF-Signal);
einen Analog-Digital-Wandler (23) zum Umwandeln des erzeugten IF-Signals in ein digitales IF-Signal;
einen digitalen Signalprozessor (74) zum Demodulieren des digitales IF-Signals in I- und Q-Komponenten, wobei die I- und Q-Komponenten entwürfelt und entspreizt werden, um die Code Domain Power, CDP, zu berechnen; und
eine Anzeige (25) zum Anzeigen der CDP als Reaktion auf Signale vom digitalen Signalprozessor (74);
**dadurch gekennzeichnet, dass**
der digitale Signalprozessor (74) Folgendes umfasst: zwei Prozessoren (83, 84), die I- und Q-Komponentensignale entwürfeln und entspreizen, die Amplituden- und Phaseninformationen aufweisen, die durch Demodulieren des digitalen IF-Signals als QPSK-modulierte Signale mit einem ersten Verwürfelungscode erhalten wurden; und die die I- und Q-Komponentensignale als QPSK-modulierte Signale mit einem zweiten Verwürfelungscode gleichzeitig entwürfeln und entspreizen, sowie zwei CDP-Berechnungsvorrichtungen (64), die mit dem ersten bzw. dem zweiten Prozessor (83, 84) verbunden sind, die jede CDP hinsichtlich der I- und Q-Achsen ausgehend von zwei unterschiedlichen Signalen berechnen, die durch Entwürfeln und Entspreizen der I- und Q-Komponentensignale mit Verwürfelungscodes erhalten wurden, und die Anzeige (25), die mit beiden CDP-Berechnungsvorrichtungen (64) verbunden ist, aktivieren, so dass die CDPs, die dem ersten und zweiten Verwürfelungscode, die durch die CDP-Berechnungsvorrichtung (64) berechnet wurden, entsprechen, unterscheidbar angezeigt werden.

3. Vorrichtung (50) nach Anspruch 1, wobei der digitale Signalprozessor (54) die Anzeige (25) aktiviert, um die CDPs anzuzeigen, die ausgehend von den zwei unterschiedlichen Signalen an entsprechenden unterschiedlichen Dimensionsachsen berechnet wurden.

4. Vorrichtung (50) nach Anspruch 1, wobei der digitale Signalprozessor (54) die Anzeige (25) aktiviert, um die CDPs anzuzeigen, die ausgehend von den zwei unterschiedlichen Signalen auf einer identischen Dimensionsachse in gestapelter Weise berechnet wurden.

5. Vorrichtung (50) nach Anspruch 1, wobei der digitale Signalprozessor (54) die Anzeige (25) aktiviert, um die CDPs visuell unterscheidbar mit Farben oder Mustern anzuzeigen, wobei die CDPs ausgehend von zwei unterschiedlichen Signalen berechnet werden.

6. Verfahren zur Anzeige von Code Domain Power, das Folgendes umfasst:
Umwandeln einer Frequenz eines CDMA-Signals, um ein Zwischenfrequenzsignal (IF-Signal) zu erzeugen,
Umwandeln des IF-Signals in ein digitales IF-Signal zur IQ-Demodulation des digitalen IF-Signals,
individuelles Entwürfeln und Entspreizen an zwei Prozessoren (63), die jeweils jedem der I- und Q-Komponentensignale entsprechen, die durch IQ-Demodulation des digitalen IF-Signals erhalten wurden, als jeweilige BPSK-modulierte Signale,
Berechnen einer Code Domain Power, CDP, einer I-Achse und einer Code Domain Power einer Q-Achse ausgehend von Signalen die durch Entwürfeln und Entspreizen der I- und Q-Komponentensignale erhalten wurden, mittels zweier CDP-Berechnungsvorrichtungen (64), die mit dem I-Komponentensignalprozessor (63) bzw. dem Q-Komponentensignalprozessor (63) verbunden sind, und
Anzeigen der berechneten Code Domain Power auf einer Anzeige (25), die mit beiden CDP-Berechnungsvorrichtungen (64) verbunden ist.

7. Verfahren zur Anzeige von Code Domain Power, das Folgendes umfasst:
Umwandeln einer Frequenz eines CDMA-Signals, um ein Zwischenfrequenzsignal (IF-Signal) zum Umwandeln des IF-Signals in ein digitales IF-Signal zu erzeugen,
IQ-Demodulation des digitales IF-Signals,
individuelles Entwürfeln und Entspreizen jedes der I- und Q-Komponentensignale, die durch IQ-Demodulation des digitalen IF-Signals erhalten wurden, als jeweilige QPSK-modulierte Signale unter Verwendung eines ersten Verwürfelungscodes und eines zweiten Verwürfelungscodes an zwei Prozessoren (83, 84), die dem ersten und zweiten Verwürfelungscode entsprechen,
Berechnen einer Code Domain Power, CDP, mit dem ersten Verwürfelungscode und einer Code Domain Power mit dem zweiten Verwürfelungscode ausgehend von Signalen, die durch Entwürfeln erhalten wurden, mit Hilfe zweier CDP-Berechnungsvorrichtungen (64), die mit dem ersten bzw. dem zweiten Prozessor (83, 84) verbunden sind, und
Entspreizen der I- und Q-Komponentensignale und Anzeigen der berechneten Code Domain Power auf einer Anzeige (25), die mit beiden CDP-Berechnungsvorrichtungen (64) verbunden ist.

8. Verfahren nach Anspruch 6, wobei die CDPs, die in dem Berechnungsschritt berechnet werden, auf jeweils unterschiedlichen Dimensionsachsen angezeigt werden.

9. Verfahren nach Anspruch 6, wobei die CDPs, die in dem Berechnungsschritt berechnet werden, auf einer identischen Dimensionsachse angezeigt werden.

10. Verfahren nach Anspruch 6, wobei die CDPs, die in dem Berechnungsschritt berechnet werden, visuell unterscheidbar mit Farben oder Mustern angezeigt werden.

## Revendications

1. Appareil (50) permettant d'afficher la puissance du domaine code dans une analyse de signaux CDMA et comprenant :
un convertisseur abaisseur de fréquence (21) permettant de recevoir un signal CDMA et d'abaisser la fréquence du signal CDMA à une fréquence intermédiaire (FI) ;
un convertisseur analogique à numérique (A/N) (23) permettant de convertir le signal FI produit en un signal FI numérique ;
un processeur de signaux numériques (54) permettant de réaliser une démodulation du signal FI numérique (en composants I et Q), en désembrouillant et en comprimant les composants I et Q afin de calculer la puissance du domaine code (PDC) ; et
un écran d'affichage (25) permettant d'afficher la PDC en réponse aux signaux provenant du processeur de signaux numériques (54) ;
**caractérisé par le fait que**
ledit processeur de signaux numériques (54) comprend deux processeurs (63) permettant de désembrouiller et de comprimer individuellement comme signaux modulés en traitement binaire chacun des signaux des composants I et Q dont les informations sur l'amplitude et la phase ont été obtenues en démodulant le signal FI numérique, et deux calculateurs de PDC (64) connectés respectivement au processeur de signaux du composant I (63) et au processeur de signaux du composant Q (63), qui calculent les PDC par rapport aux axes I et Q, respectivement, à partir de deux signaux différents obtenus en désembrouillant et en comprimant les signaux des composants I et Q, et qui activent ledit écran d'affichage (25) qui est connecté aux deux calculateurs de PDC mentionnés plus haut (64) pour afficher de façon distincte les PDC de chacun des axes I et Q qui ont été calculées par ledit calculateur de PDC (64).

2. Appareil (70) permettant d'afficher la puissance du domaine code dans une analyse de signaux CDMA et comprenant :
un convertisseur abaisseur de fréquence (21) permettant de recevoir un signal CDMA et d'abaisser la fréquence du signal CDMA à une fréquence intermédiaire (FI) ;
un convertisseur analogique à numérique (A/N) (23) permettant de convertir le signal FI produit en un signal FI numérique ;
un processeur de signaux numériques (74) permettant de réaliser une démodulation du signal FI numérique en composants I et Q, en désembrouillant et en comprimant les composants I et Q afin de calculer la puissance du domaine code (PDC) ; et
un écran d'affichage (25) permettant d'afficher la PDC en réponse aux signaux provenant du processeur de signaux numériques (74) ;
**caractérisé par le fait que**
ledit processeur de signaux numériques (74) comprend deux processeurs (83, 84), qui désembrouillent et compriment les signaux des composants I et Q dont les informations sur l'amplitude et la phase ont été obtenues en démodulant le signal FI numérique, comme signaux modulés en traitement quaternaire avec un premier code de brouillage ; et qui désembrouillent et compriment simultanément les signaux des composants I et Q comme signaux modulés en traitement quaternaire avec un second code de brouillage ; et deux calculateurs de PDC (64) connectés respectivement aux premier et second processeurs (83, 84) qui calculent chaque PDC par rapport aux axes I et Q avec des codes de brouillage ; et activent l'écran d'affichage (25) qui est connecté aux deux calculateurs de PDC mentionnés plus haut (64) pour afficher de façon distincte les PDC correspondant aux premier et second codes de brouillage calculés par ledit calculateur de PDC (64).

3. Appareil (50) selon la revendication 1, suivant lequel ledit processeur de signaux numériques (54) active ledit écran d'affichage (25) pour afficher les PDC calculées à partir des deux signaux différents mentionnés plus haut sur les différents axes respectifs de dimension.

4. Appareil (50) selon la revendication 1, suivant lequel ledit processeur de signaux numériques (54) active ledit écran d'affichage (25) pour afficher les PDC calculées à partir des deux signaux différents mentionnés plus haut sur un axe identique de dimension de façon empilée.

5. Appareil (50) selon la revendication 1, suivant lequel ledit processeur de signaux numériques (54) active ledit écran d'affichage (25) pour afficher les PDC de façon à ce qu'elles puissent être distinguées visuellement par des couleurs ou motifs différents, lesdites PDC étant calculées à partir des deux signaux différents mentionnés plus haut.

6. Méthode d'affichage de la puissance du domaine code, comprenant :
la conversion d'une fréquence d'un signal CDMA de façon à générer un signal de fréquence intermédiaire (FI),
la conversion du signal FI en un signal FI numérique pour réaliser la démodulation en composants I et Q du signal FI numérique,
le désembrouillage et la compression de façon individuelle au niveau de deux processeurs (63) qui correspondent respectivement à chacun des signaux des composants I et Q obtenus par la démodulation en composants I et Q du signal FI numérique, comme signaux modulés respectivement en traitement binaire,
le calcul par deux calculateurs de PDC (64), connecté au processeur de signaux du composant I (63) et au processeur de signaux du composant Q (63), respectivement, d'une puissance de domaine code, PDC, d'un axe I et d'une puissance de domaine code d'un axe Q à partir des signaux obtenus en désembrouillant et en comprimant les signaux des composants I et Q, et
la présentation sur un écran d'affichage (25) connecté aux deux calculateurs de PDC mentionnés plus haut (64) des puissances de domaine code calculées.

7. Méthode d'affichage de la puissance du domaine code comprenant :
la conversion d'une fréquence d'un signal CDMA afin de produire un signal de fréquence intermédiaire (FI) pour convertir le signal FI en un signal FI numérique,
la démodulation en composants I et Q du signal FI numérique,
le désembrouillage et la compression de façon individuelle de chacun des signaux des composants I et Q en démodulant en composants I et Q le signal FI numérique, comme signaux modulés en traitement quaternaire en utilisant respectivement un premier code de brouillage et un second code de brouillage au niveau de deux processeurs (83, 84), correspondant à chacun des premier et second codes de brouillage mentionnés plus haut,
le calcul par deux calculateurs de PDC (64), connectés aux premier et second processeurs (83, 84), respectivement, d'une puissance de domaine code, PDC, avec ledit premier code de brouillage et une puissance de domaine code avec ledit second code de brouillage à partir de signaux obtenus par le désembrouillage, et
la compression des signaux des composants I et Q et la présentation sur un écran d'affichage (25) connecté aux deux calculateurs de PDC mentionnés plus haut (64) des puissances de domaine code calculées.

8. Méthode selon la revendication 6, suivant laquelle les PDC calculées lors de l'étape de calcul sont affichées respectivement sur différents axes de dimension.

9. Méthode selon la revendication 6, suivant laquelle les PDC calculées lors de l'étape de calcul sont affichées sur un axe de dimension identique.

10. Méthode selon la revendication 6, suivant laquelle les PDC calculées lors de l'étape de calcul sont affichées de façon à ce qu'elles puissent être distinguées visuellement par des couleurs ou motifs différents.
